# EUROPÄISCHE PATENTSCHRIFT

(11) **EP 0 309 814 B1**
(45) Veröffentlichungstag und Bekanntmachung des Hinweises auf die Patenterteilung: **16.06.1993**
(21) Anmeldenummer: 88115028.8
(22) Anmeldetag: 14.09.1988
(51) Int. Cl.: H02P 9/08, H02P 9/14

(54) **Anordnung zur Erzeugung elektrischer Energie**
Electric energy generation device
Dispositif à engendrer de l'énergie électrique

(30) Priorität: 28.09.1987 DE 3732669
(43) Veröffentlichungstag der Anmeldung: 05.04.1989
(73) Patentinhaber: SIEMENS AKTIENGESELLSCHAFT, 80333 München (DE)
(72) Erfinder: Schlüter, Ekkehard, Dipl.-Ing., D-2100 Hamburg 90 (DE)

(56) Entgegenhaltungen:
- DE-A- 1 800 040
- DE-A- 2 845 930
- DE-A- 3 425 330

## Beschreibung

Die Erfindung betrifft eine Anordnung zur Erzeugung elektrischer Energie sowie ein Verfahren zum Anfahren eines großen Verbrauchers.

Eine Anordnung dieser Art ist aus der DE-OS 28 45 930 bekannt. Dabei ist eine mit einer Antriebsmaschine gekuppelte Drehfeldmaschine mit ihrer Ankerwicklung an ein Wechselspannungsnetz mit drehzahlunabhängiger Frequenz und mit ihrer Erregerwicklung an den Wechselspannungsausgang eines an dem gleichen Wechselspannungsnetz liegenden Umrichters angeschlossen. Arbeitet bei einer solchen Anordnung die Drehfeldmaschine allein auf das Netz, dann erhält sie im Falle eines Netzkurzschlusses keine Erregerleistung mehr und kann daher keinen für eine Auslösung von Schutzeinrichtungen ausreichenden Kurzschlußstrom liefern.

Bei einer durch die DE-OS 34 25 330 bekannten Anlage zur Versorgung eines Drehstromnetzes ist zur Sicherstellung eines ausreichenden Kurzschlußstromes mit einem Asynchron-Generator ein die Erregerleistung liefernder Synchron-Generator gekuppelt. Damit steht bei einem Netzkurzschluß weiterhin der notwendige Erregerstrom zur Verfügung. Der zusätzliche Einsatz des Synchron-Generators bedeutet jedoch einen erheblichen Aufwand.

Aus der DE-OS-18 00 040 ist eine Anordnung zur Erregung eines Synchron-Generators bekannt. Dabei wird der einphasigen Induktorwicklung des Generators über zwei parallel arbeitende Erregereinrichtungen gleichzeitig Erregerleistung zugeführt. Die erste Erregereinrichtung besteht aus einem Drehstromwandler, welcher zwischen den Enden der Phasenwicklung des Generators und den Ausgangsklemmen zum Verbraucher angeordnet ist. Dieser ist am Ausgang mit einer Drehstrom-Gleichrichterbrücke beschaltet, welche mit der Induktorwicklung des Generators verbunden ist. Die zweite Erregereinrichtung besteht aus einer an einer Phase angeschlossenen Gleichrichterdiode und einem am Sternleiter angeschlossenen gesteuerten Thyristor. Dieser Stromkreis ist ebenfalls mit der Induktorwicklung verbunden. Die beiden Erregereinrichtungen sind so ausgelegt, daß bei niedriger Auslastung des Generators die Erregung hauptsächlich durch die zweite Erregereinrichtung bereitgestellt wird. Mit steigender Belastung beteiligt sich die erste Erregereinrichtung zunehmend an der Bereitstellung von Erregerleistung, und übernimmt im Bereich der Nennlast und bei Überschreitung derselben z.B. im Kurzschlußfall fast vollständig die Erregung des Generators.

Der Erfindung liegt die Aufgabe zugrunde, eine Anordnung zur Erzeugung elektrische Energie so auszubilden, daß im Falle eines Netzkurzschlusses die zur Erzeugung eines ausreichenden Kurzschlußstromes notwendige Erregerleistung auf wesentlich wirtschaftlichere Weise zur Verfügung stellbar ist.

Die Aufgabe wird gelöst mit der Anordnung nach Anspruch 1.

Zur Sicherstellung einer ausreichenden Erregerleistung reicht eine Größe der Gegeninduktivität von ca. 10% der Nennimpedanz der Drehfeldmaschine aus. Über den an die Sekundärseite der Gegeninduktivität angeschlossenen Erregergleichrichter wird der Erregerwicklung der Drehfeldmaschine ein ausreichender Erregerstrom zugeführt. Da sich das Eisen der Gegeninduktivität mit steigendem Strom sättigt, stellt sich ein konstanter Kurzschlußstrom ein. Die Höhe des Dauerkurzschlußstromes ist von der Dimensionierung der Gegeninduktivität abhängig.

Dadurch, daß im Eisenkreis der Gegeninduktivität ein Luftspalt vorgesehen ist, wirkt diese im ungestörten Betrieb als lineare Drossel.

Gesonderte Schaltelemente für das Anschalten des Gleichrichters an die Erregerwicklung im Kurzschlußfall sind dadurch entbehrlich, daß der Erregergleichrichter steuerbare Halbleiter-Schaltelemente aufweist, die im Kurzschlußfall mittels einer Steuereinrichtung durchgesteuert sind.

Der technische Aufwand läßt sich auch bei einer dreiphasigen Drehfeldmaschine dadurch gering halten, daß die Sekundärwicklungen der Gegeninduktivität mit ihrem einen Wicklungsende in Stern geschaltet und mit ihrem anderen Wicklungsende jeweils mit einem steuerbaren Halbleiter-Schaltelement des Erregergleichrichters verbunden sind, wobei die steuerbaren Halbleiter-Schaltelemente mit ihrem anderen Anschlußpol ebenfalls in Stern geschaltet sind, und daß der Sternpunkt der Sekundärwicklungen an einen Strang der Erregerwicklung und der Sternpunkt der Halbleiter-Schaltelemente an einen anderen Strang der Erregerwicklung angeschlossen ist.

Überspannungen zwischen dem nicht mit einem der Sternpunkte verbundenen Strang und den beiden anderen Strängen der Erregerwicklung lassen sich dadurch vermeiden, daß der mit keinem der Sternpunkte verbundene Strang der Erregerwicklung im Kurzschlußfall mittels des Schaltelementes an eine der beiden mit einem der Sternpunkte verbundenen Stränge der Erregerwicklung anschaltbar ist. Dadurch wird auch eine Belastung des Wechselrichters und der Erregerwicklung durch Überspannungen vermieden.

Eine Spannungsbegrenzung im Zwischenkreis des Umrichters wird dadurch erreicht, daß die beiden an den Sternpunkt der Sekundärwicklungen und den Sternpunkt der Halbleiter-Schaltelemente des Erregergleichrichters angeschlossenen Stränge der Erregerwicklung im Kurzschlußfall für die Zeit bis zu einer Stromabgabe des Erregergleichrichters über einen einschaltbaren Widerstand miteinander verbunden sind oder auch dadurch, daß der Wechselrichter des Umrichters aus steuerbaren Halbleiter-Schaltelementen besteht, zu denen entsprechend dem im Kurzschlußfall in der Erregerwicklung auftretenden Strom dimensionierte Freilaufdioden antiparallel geschaltet sind, und im Zwischenkreis des Umrichters ein Überspannungsableiter angeordnet ist.

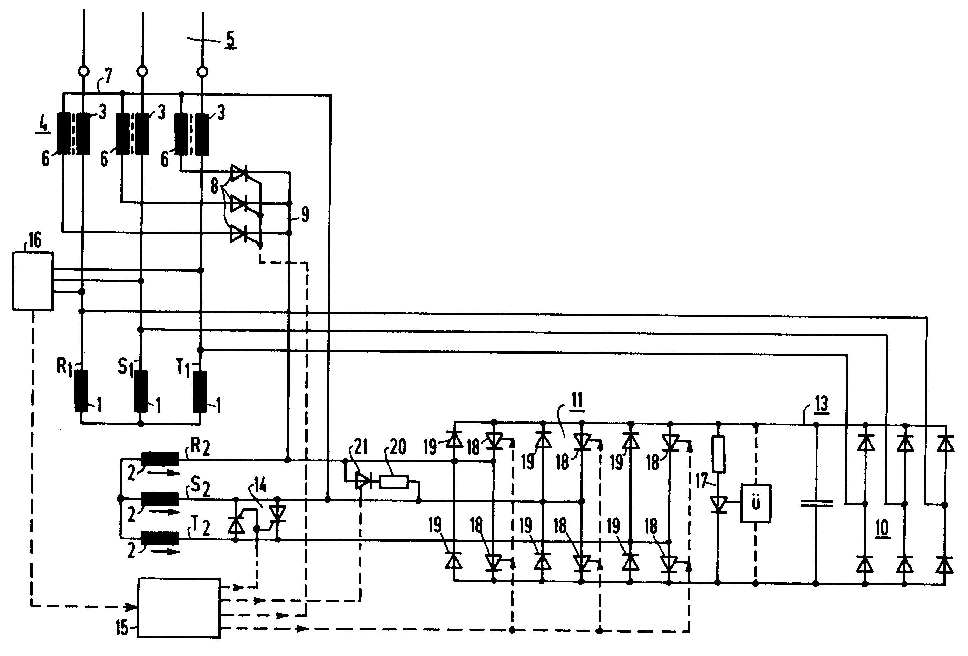

Anhand eines in der Zeichnung dargestellten elektrischen Schaltbildes wird ein Ausführungsbeispiel der erfindungsgemäßen Anordnung zur Erzeugung elektrischer Energie näher beschrieben.

Mit 1 ist die Anker- und mit 2 die Erregerwicklung einer dreiphasigen Drehfeldmaschine bezeichnet. Als Drehfeldmaschine eignet sich insbesondere ein Asynchron-Generator mit Schleifringläufer. Über die Primärwicklungen 3 einer als dreiphasiger Transformator ausgebildeten Gegeninduktivität 4 ist die Ankerwicklung 1 der Drehfeldmaschine an ein dreiphasiges Wechselspannungsnetz 5 angeschlossen. Die Sekundärwicklungen 6 der Gegeninduktivität 4 sind mit ihren einen Wicklungsenden zu einem Wicklungssternpunkt 7 zusammengeschaltet. Mit ihrem anderen Wickungsende ist jede Sekundärwicklung 6 an die eine Lastelektrode eines als steuerbares Halbleiter-Schaltelement dienenden Thyristors 8 angeschlossen. Mit der anderen Lastelektrode sind die Thyristoren 8 zu einem Sternpunkt 9 zusammengeschaltet. Die Thyristoren 8 bilden somit einen Erregergleichrichter. Die beiden Sternpunkte 7 und 9 sind die ausgangsseitigen Anschlußpole der aus der Gegeninduktivität 4 und dem Erregergleichrichter 8 bestehenden Erregungsanordnung und sind daher an zwei Stränge der Erregerwicklung 2 angeschlossen.

Im regulären Betrieb der Anordnung erhält die Erregerwicklung 2 über einen aus einem umgesteuerten Gleichrichter 10 und einem Wechselrichter 11 bestehenden Umrichter 13 die erforderliche Erregerleistung aus dem Wechselspannungsnetz 5 zugeführt. Anstelle eines ungesteuerten Gleichrichters 10 kann auch ein Stromrichter mit gesteuerten Halbleiter-Schaltelementen verwendet werden. Der Gleichrichter 10 ist an das Netz 5 und die Erregerwicklung 2 an den Wechselrichter 11 angeschlossen. Als Überspannungsschutz für den Erregergleichrichter 8, die Erregerwicklung 2 und den Wechselrichter 11 ist zwischen dem nicht mit einem der Sternpunkte 7 und 9 verbundenen Strang der Erregerwicklung 2 und einem mit einem der Sternpunkte 7 und 9 verbundenen Stränge der Erregerwicklung 2 ein aus zwei antiparallel geschalteten Thyristoren bestehendes Schaltelement 14 angeordnet. Dieses Schaltelement 14 wird durch eine Steuereinrichtung 15, der über ein Erfassungsgerät 16 die Steuersignale aus dem Strom und der Spannung der Ankerwicklung 1 der Drehfeldmaschine zugeführt werden, im Kurzschlußfall durchgesteuert und stellt damit eine leitende Verbindung zwischen den betreffenden Strängen der Erregerwicklung 2 her.

Zur Spannungsbegrenzung im Zwischenkreis des Umrichters 13 ist ein Überspannungsableiter 17 zwischen den beiden Spannungspolen des Zwischenkreises angeschlossen. Zu den steuerbaren Halbleiter-Schaltelementen 18 des Wechselrichters 11 sind Freilaufdioden 19 antiparallel geschaltet, die im Kurzschlußfall den in der Erregerwicklung auftretenden Strom führen können.

Alternativ kann die Spannungsbegrenzung im Zwischenkreis auch mittels eines im Kurzschlußfall an die beiden mit den Sternpunkten 7 und 9 verbundenen Stränge der Erregerwicklung 2 anschaltbaren Widerstandes 20 erfolgen. Mit dem Widerstand 20 ist ein Steuerthyristor 21 in Reihe geschaltet, der im Kurzschlußfall durch das Steuergerät 15 einen Durchsteuerimpuls erhält und damit den Widerstand 20 einschaltet. Die Steuerung ist dabei so gestaltet, daß der Steuerthyristor 21 in Abhängigkeit von der Stromrichtung in der Erregerwicklung 2 abwechselnd zu den Thyristoren 8 des Erregergleichrichters durchgesteuert wird.

Die Anordnung arbeitet wie folgt:
Im Kurzschlußfall werden die steuerbaren Halbleiter-Schaltelemente 18 des Wechselrichters 11 durch die Steuereinrichtung 15 unverzüglich gesperrt, so daß sie nicht durch die Stoßamplitude des läuferseitigen Kurzschlußstromes belastet werden. Während des Kurzschlußvorganges erhält die Erregerwicklung 2 dann über die Thyristoren 8 Erregerleistung von der Gegeninduktivität 4 zugeführt. Unmittelbar nach dem Sperren des Wechselrichters 11 werden die Thyristoren des Schaltelementes 14 durchgesteuert und damit die betreffenden Stränge der Erregerwicklung 2 miteinander verbunden. Damit wird das Auftreten von Überspannungen am Erregergleichrichter 8, an der Erregerwicklung 2 und an dem Wechselrichter 11 unterbunden.

Durch die an den Sternpunkten 7 und 9 bei einem Kurzschluß anstehende Spannung kann über die Freilaufdioden 19 eine Erhöhung der Spannung im Zwischenkreis des Umrichters 13 bewirkt werden. Der zwischen den beiden Spannungspolen des Zwischenkreises angeschlossene Überspannungsableiter 17 begrenzt dann die Spannung im Zwischenkreis auf zulässige Werte.

Eine solche Begrenzung der Zwischenkreisspannung kann auch durch den zwischen den beiden mit den Sternpunkten 7 und 9 verbundenen Strängen der Erregerwicklung 2 angeordneten Widerstand 20 erreicht werden. Dieser wird, wie bereits erläutert, durch die Steuereinrichtung 15 abwechselnd zu den Thyristoren des Erregergleichrichters 8 in Abhängigkeit von der Stromrichtung in den entsprechenden Strängen der Erregerwicklung 2 durchgesteuert.

Die beschriebene Anordnung kann auch beim Anfahren großer Verbraucher in dem Netz vorteilhafterweise genutzt werden. Hierzu wird beim Anfahren eines großen Verbrauchers der Erregergleichrichter 8 wie im Kurzschlußfall an die Erregerwicklung 2 angeschaltet und dadurch die Drehfeldmaschine mit Erregerleistung versorgt. Die Drehfeldmaschine liefert dann eine Spannung, deren Frequenz der Antriebsdrehzahl der Drehfeldmaschine entspricht. Sind an das Netz Verbraucher angeschlossen, die auch kurzzeitig nicht mit einer höheren Frequenz betrieben werden dürfen, so ist die höchste zulässige Antriebsdrehzahl für die Drehfeldmaschine dadurch gegeben, daß im Falle der Gleichstromerregung die zulässige Netzfrequenz nicht überschritten wird. Während eines solchen Anlaufvorganges wird die Frequenzregelung des Umrichters 13 inaktiviert.

Beim Anfahren eines großen Verbrauchers wird jeweils dann, wenn der Strom in der Erregerwicklung 2 größer als der Nennstrom ist, der Umrichter 13 abgeschaltet und dafür der Erregergleichrichter 8 an die Erregerwicklung 2 angeschaltet. Nach dem erfolgten Anlauf übernimmt der Wechselrichter 11 den Erregerstrom mit der Frequenz fₑᵣᵣ = 0 und die Frequenzregelung des Umrichters 13 verändert die Frequenz des Erregerstromes in der Weise, daß die gewünschte Netzfrequenz erreicht und der Frequenzregler wieder aktiviert wird.

## Patentansprüche

1. Anordnung zur Erzeugung elektrischer Energie, bei der eine mit einer Antriebsmaschine gekuppelte Asynchronmaschine mit der Ankerwicklung (1) an ein Wechselspannungsnetz (5) mit drehzahlunabhängiger Frequenz angeschlossen ist, und eine dreiphasige Erregerwicklung (2) aufweist, mit
a) einem Umrichter (13), dessen Gleichrichter (10) an dem Wechselspannungsnetz (5) angeschlossen ist und dessen Wechselrichter (11) der dreiphasigen Erregerwicklung (2) im regulären Betrieb Erregerenergie zuführt,
b) einer weiteren Erregungsanordnung aus einer Gegeninduktivität (4), über deren Primärwicklung (3) die Ankerwicklung (1) der Asynchronmaschine an das Wechselspannungsnetz (5) angeschlossen ist, und einem Erregergleichrichter (8) an deren Sekundärwicklung (6),
c) einem Schaltelement (14) zwischen zwei Strängen der Erregerwicklung (2), und
d) einer Steuereinrichtung (15), welche im Falle eines Netzkurzschlusses
d1) den Wechselrichter (11) des Umrichters (13) abschaltet,
d2) das Schaltelement (14) zur Verbindung von zwei Strängen der Erregerwicklung (2) aktiviert, und
d3) eine Leitung (9) der Gleichspannungsseite (7,9) des Erregergleichrichters (8) in der weiteren Erregungsanordnung an den nicht durch das Schaltelement (14) verbundenen Strang der Erregerwicklung (2) anschaltet und die andere Leitung (7) der Gleichspannungsseite (7,9) an einen der durch das Schaltelement (14) verbundenen Stränge der Erregerwicklung (2) anschaltet.

2. Anordnung nach Anspruch 1,
**dadurch gekennzeichnet**,
daß im Eisenkreis der Gegeninduktivität (4) ein Luftspalt vorgesehen ist.

3. Anordnung nach Anspruch 1 oder 2,
**dadurch gekennzeichnet**,
daß der Erregergleichrichter (8) steuerbare Halbleiter-Schaltelemente aufweist, die im Kurzschlußfall mittels der Steuereinrichtung (15) durchgesteuert sind.

4. Anordnung nach Anspruch 3,
**dadurch gekennzeichnet**,
daß die Sekundärwicklungen (6) der Gegeninduktivität (4) mit ihrem einen Wicklungsende in Stern (7) geschaltet und mit ihrem anderen Wicklungsende jeweils mit einem steuerbaren Halbleiter-Schaltelement des Erregergleichrichters (8) verbunden sind, wobei die steuerbaren Halbleiter-Schaltelemente mit ihrem anderen Anschlußpol ebenfalls in Stern (9) geschaltet sind, und daß der Sternpunkt (7) der Sekundärwicklungen (6) an einen Strang der Erregerwicklung (2) und der Sternpunkt (9) der Halbleiter-Schaltelemente an einen anderen Strang der Erregerwicklung (2) angeschlossen ist.

5. Anordnung nach Anspruch 4,
**dadurch gekennzeichnet**,
daß der mit keinem der Sternpunkte (7 und 9) verbundene Strang der Erregerwicklung (2) im Kurzschlußfall mittels des Schaltelementes (14) an einen der beiden mit einem der Sternpunkte (7 bzw.9) verbundenen Stränge der Erregerwicklung (2) anschaltbar ist.

6. Anordnung nach einem der Ansprüche 4 oder 5,
**dadurch gekennzeichnet**,
daß die beiden an den Sternpunkt (7) der Sekundärwicklungen (6) und den Sternpunkt (9) der Halbleiter-Schaltelemente des Erregergleichrichters (8) angeschlossenen Stränge der Erregerwicklung (2) im Kurzschlußfall für die Zeit bis zu einer Stromabgabe des Erregergleichrichters (8) über einen einschaltbaren Widerstand (20) miteinander verbunden sind.

7. Anordnung nach Anspruch 6,
**dadurch gekennzeichnet**,
daß der Widerstand (20) mittels eines steuerbaren Halbleiter-Schaltelementes (21) an die beiden Stränge anschaltbar ist.

8. Anordnung nach einem der Ansprüche 1 bis 7,
**dadurch gekennzeichnet**,
daß der Wechselrichter (11) des Umrichters (13) aus steuerbaren Halbleiter-Schaltelementen (18) besteht, zu denen entsprechend dem im Kurzschlußfall in der Erregerwicklung (2) auftretenden Strom dimensionierte Freilaufdioden (19) antiparallel geschaltet sind, und im Zwischenkreis des Umrichters (13) ein Überspannungsableiter (17) angeordnet ist.

9. Verfahren zum Anfahren eines großen Verbrauchers, unter Verwendung einer Anordnung nach einem oder mehreren der vorhergehenden Ansprüche 1 bis 8,
**dadurch gekennzeichnet**,
daß nach dem Anschalten des großen Verbrauchers an das Netz der Umrichter (13) jeweils dann abgeschaltet und der Erregergleichrichter (8) an die Erregerwicklung (2) angeschaltet wird, wenn der Erregerstrom in der Erregerwicklung (2) über einen zulässigen Wert ansteigt und daß nach dem Anlauf des Verbrauchers der Wechselrichter (11) den Erregerstrom mit der Frequenz fₑᵣᵣ = 0 übernimmt und danach die Frequenz des Erregerstromes durch einen Frequenzregler auf einen der gewünschten Netzfrequenz entsprechenden Wert geregelt wird.

## Claims

1. Arrangement for generating electrical energy, where an asynchronous machine coupled to a drive machine is connected with the armature winding (1) to an alternating-voltage system (5) with frequency independent of speed, and has a three-phase exciter winding (2), having
a) a converter (13), the rectifier (10) of which is connected to the alternating-voltage system (5) and the inverter (11) of which supplies excitation power to the three-phase exciter winding (2) in regular operation,
b) a further excitation arrangement comprising a mutual inductance (4), across the primary winding (3) of which mutual inductance the armature winding (1) of the asynchronous machine is connected to the alternating-voltage system (5), and an exciter rectifier (8) to its secondary winding (6),
c) a switching element (14) between two phases of the exciter winding (2), and
d) a control device (15),which in the event of a short circuit of the system
d1) disconnects the inverter (11) of the converter (13),
d2) activates the switching element (14) for connecting two phases of the exciter winding (2), and
d3) connects a line (9) of the direct-voltage side (7, 9) of the exciter rectifier (8) in the further excitation arrangement to that phase of the exciter winding (2) which is not connected by means of the switching element (14), and connects the other line (7) of the direct-voltage side (7, 9) to one of the phases of the exciter winding (2) connected by means of the switching element (14).

2. Arrangement according to claim 1, characterized in that an air gap is provided in the iron core of the mutual inductance (4).

3. Arrangement according to claim 1 or 2, characterized in that the exciter rectifier (8) has controllable semiconductor switching elements which are switched through in the event of a short circuit by means of the control device (15)

4. Arrangement according to claim 3, characterized in that the secondary windings (6) of the mutual inductance (4) are star-connected (7) with one of their winding ends and with their other winding ends are in each case connected to a controllable semiconductor switching element of the exciter rectifier (8), whereby the controllable semiconductor switching elements are likewise star-connected (9) with their other terminal pole, and in that the star point (7) of the secondary windings (6) is connected to a phase of the exciter winding (2) and the star point (9) of the semiconductor switching elements is connected to another phase of the exciter winding (2).

5. Arrangement according to claim 4, characterized in that the phase of the exciter winding (2) connected to none of the star points (7 and 9) can be connected in the event of a short circuit by means of the switching element (14) to one of the two phases of the exciter winding (2) connected to one of the star points (7 or 9).

6. Arrangement according to one of claims 4 or 5, characterized in that the two phases of the exciter winding (2) connected to the star point (7) of the secondary windings (6) and to the star point (9) of the semiconductor switching elements of the exciter rectifier (8) are connected to one another in the event of short circuit for the period up to a current emission of the exciter rectifier (8) by way of a connectable resistance (20).

7. Arrangement according to claim 6, characterized in that the resistance (20) can be connected to the two phases by means of a controllable semiconductor switching element (21).

8. Arrangement according to one of claims 1 to 7, characterized in that the inverter (11) of the converter (13) consists of controllable semiconductor switching elements (18), with which there are connected in antiparallel manner free-wheeling diodes (19) dimensioned such that they correspond with the current occurring in the event of a short circuit in the exciter winding (2), and a surge diverter (17) is arranged in the intermediate circuit of the converter (13).

9. Method for starting up a large consumer, with the use of an arrangement according to one or more of the preceding claims 1 to 8, characterized in that after connecting the large consumer to the system the converter (13) is then disconnected in each case and the exciter rectifier (8) is connected to the exciter winding (2) when the exciter current in the exciter winding (2) rises above a permissible value and in that after the start-up of the consumer the inverter (11) accepts the exciter current with the frequency fₑᵣᵣ = 0 and thereafter the frequency of the exciter current is controlled by a frequency control to a value corresponding with the desired system frequency.

## Revendications

1. Dispositif pour produire de l'énergie électrique, dans lequel un moteur asynchrone accouplé à un moteur d'entraînement, est reliée, par l'enroulement d'induit (1), à un réseau de tension alternative (5) de fréquence indépendante de la vitesse de rotation, et qui comporte un enroulement d'excitation (2) triphasé, ledit dispositif comportant :
a) un convertisseur de fréquence (13) dont le redresseur (10) est relié au réseau de tension alternative (5) et dont l'onduleur (11) alimente l'enroulement d'excitation (2) triphasé, en énergie d'excitation, en fonctionnement régulier,
b) un autre dispositif d'excitation constitué d'une inductance mutuelle (4), par l'intermédiaire de l'enroulement primaire (3) de laquelle l'enroulement d'induit (1) du moteur asynchrone est relié au réseau de tension alternative (5), et d'un redresseur d'excitation (8) relié à son enroulement secondaire (6),
c) un élément de commutation (14) situé entre deux phases de l'enroulement d'excitation (2), et
d) un dispositif de commande (15), qui, dans le cas d'un court-circuit du réseau,
d1) débranche l'onduleur (11) du convertisseur de fréquence (13),
d2) active l'élément de commutation (14) pour relier deux phases de l'enroulement d'excitation (2), et
d3) branche, dans l'autre dispositif d'excitation, un conducteur (9) du côté tension continue (7, 9) du redresseur d'excitation (8) à la phase de l'enroulement d'excitation (2) qui n'est pas reliée par l'élément de commutation (14), et branche l'autre conducteur (7) du côté tension continue (7, 9), à une des phases de l'enroulement d'excitation (2) qui sont reliées par l'élément de commutation (14).

2. Dispositif selon la revendication 1, caractérisé par le fait qu'il est prévu un entrefer dans le circuit magnétique de l'inductance mutuelle (4).

3. Dispositif selon la revendication 1 ou 2, caractérisé par le fait que le redresseur d'excitation (8) comprend des éléments de commutation à semiconducteurs, qui sont susceptibles d'être commandés et qui, dans le cas d'un court-circuit, sont portés à saturation au moyen du dispositif de commande (15).

4. Dispositif selon la revendication 3, caractérisé par le fait que les enroulements secondaires (6) de l'inductance mutuelle (4) sont reliés en étoile (7) par l'une des extrémités de leurs enroulements et sont reliés, par leurs autres extrémités, respectivement à un élément de commutation à semiconducteurs du redresseur d'excitation et susceptible d'être commandé, les éléments de commutation à semiconducteurs, susceptibles d'être commandés, étant reliés également en étoile (9) par leurs autres bornes de raccordement, et que le point neutre (7) des enroulements secondaires (6) est relié à une phase de l'enroulement inducteur (2) alors que le point neutre (9) des éléments de commutation à semiconducteurs est relié à une autre phase de l'enroulement d'excitation (2).

5. Dispositif selon la revendication 4, caractérisé par le fait que la phase de l'enroulement d'excitation (2) qui n'est reliée à aucun des points neutres (7 et 9), est susceptible d'être reliée, dans le cas d'un court-circuit, au moyen de l'élément de commutation (14), à l'une des deux phases de l'enroulement d'excitation (2), reliées à l'un des points neutres (7 ou 9).

6. Dispositif selon l'une des revendications 4 ou 5, caractérisé par le fait que les deux phases de l'enroulement d'excitation (2) qui sont reliées au point neutre (7) des enroulements secondaires (6) et au point neutre (9) des éléments de commutation à semiconducteurs du redresseur d'excitation (8), sont, en cas de court-circuit, reliées entre elles, par l'intermédiaire d'une résistance (20) susceptible d'être branchée, jusqu'à ce que le redresseur d'excitation (8) débite un courant.

7. Dispositif selon la revendication 6, caractérisé en ce que la résistance (20) est susceptible d'être reliée aux deux phases, au moyen d'un élément de commutation à semiconducteurs (21) susceptible d'être commandé.

8. Dispositif selon l'une des revendications 1 à 7, caractérisé par le fait que l'onduleur (11) du convertisseur de fréquence (13) est constitué d'éléments de commutation à semiconducteurs (18), qui sont susceptibles d'être commandés et auxquels sont reliés, de manière antiparallèle, des diodes à roue libre (19) dimensionnées en fonction du courant qui passe, en cas de court-circuit, dans l'enroulement d'excitation (2), alors qu'un éclateur (17) est monté dans le circuit indirect du convertisseur de fréquence (13).

9. Procédé pour le démarrage d'une unité consommatrice, avec mise en oeuvre d'un dispositif suivant l'une ou plusieurs des revendications précédentes 1 à 8, caractérisé par le fait que, après le branchement au réseau de l'unité consommatrice importante, le convertisseur de fréquence (13) est débranché et le redresseur d'excitation (8) est relié à l'enroulement d'excitation (2), lorsque le courant d'excitation dans l'enroulement d'excitation (2) dépasse une valeur admissible, et qu'après le démarrage de l'unité consommatrice, l'onduleur (11) assume le courant d'excitation à la fréquence fₑᵣᵣ = 0 et qu'ensuite la fréquence du courant d'excitation est réglée par un régulateur de fréquence à une valeur qui correspond à la fréquence de réseau désirée.
